# EUROPEAN PATENT SPECIFICATION

(11) **EP 3 142 472 B1**
(45) Date of publication and mention of the grant of the patent: **14.03.2018**
(21) Application number: 15729571.8
(22) Date of filing: 12.05.2015
(51) Int. Cl.: A01B 39/16

(54) **AN AGRICULTURAL IMPLEMENT FOR REMOVING THE WEEDS THAT FORM IN LAND USED AS ORCHARDS AND VINEYARDS**
LANDWIRTSCHAFTLICHES ANBAUGERÄT ZUM ENTFERNEN VON UNKRAUT AUF BODEN ZUR VERWENDUNG ALS OBST- UND WEINGÄRTEN
OUTIL AGRICOLE PERMETTANT D'ÉLIMINER LES MAUVAISES HERBES QUI SE FORMENT DANS LES TERRAINS UTILISÉS COMME VERGERS ET VIGNOBLES

(30) Priority: 16.05.2014 IT VR20140136
(43) Date of publication of application: 22.03.2017
(73) Proprietor: Laghi, Moreno, 38061 Ala (TN) (IT)
(72) Inventor: Laghi, Moreno, 38061 Ala (TN) (IT)
(74) Representative: Sandri, Sandro
(86) International application number: PCT/IB2015/053495
(87) International publication number: WO 2015/173736

(56) References cited:
- US-A- 2 791 953
- US-A- 4 287 955
- US-A- 4 544 038

## Description

### TECHNICAL FIELD

The present invention relates to an agricultural tool for eradicating infesting weeds which form in terrains used for fruit orchards and vineyards.

More specifically, the present invention relates to an agricultural tool that enables weeding operations in the vicinity of rows of fruit orchards, in particular vineyards, so that the area is kept clean, to the advantage of the plantation and, in other terms, to the advantage of the final quality of the harvested product.

The device of the invention consists of a rotary part, or pad, consisting of a rotating circular rim applied on a mechanical arm, which rim is provided with a plurality of blades designed such as to eliminate weeds in the vicinity of the vine without any displacements of terrain, alternated with a plurality of inclined tubes, which enable elimination of the weeds growing in and between the rows of vines, without causing any damage to the vines themselves.

Two pistons are used for the movement of the mechanical arm which supports and controls the cutter disc, one for lifting and lowering the rotary rim and the other for enabling the inclination of the rotary rim on the basis of the inclination of the ground to be worked.

This invention is applied in the agricultural field and in particular in the sector of machines for working the land in fruit orchards and vineyards.

### BACKGROUND ART

As is known, different systems in the agricultural field are used for eliminating infesting weeds from plantations of various kinds, including fruit orchards, and in particular vineyards.

The solutions traditionally used to perform these operations can be divided into two categories: the first relates to chemical weed killers and the second to mechanical weed removers.

Chemical weed killers can consist of substances of different chemical-physical types and compositions, although current regulations impose the use of ever-more natural and less aggressive products, which are distributed on the plants and on the terrain in the involved zones so that the infesting weeds deteriorate until they are complete removed.

The problem of chemical weed killers is inherent to the aggressive mode of their attack on the ground, which causes suffocation of the infesting weeds, stopping them from spreading on the terrain in the plantation to be weeded but which might have a negative effect on the plantation itself, causing the plants to suffer and to be less productive at harvest time.

Mechanical weeding methods, which are used to avoid spreading the ground with chemical products, are constituted by cutters of various nature generally mounted on lateral bars and farm tractors, which cause destruction of the weeds in various ways.

String cutters or toothed cutters can be used in this context, which in effect enable carrying out the cutting or uprooting of the weeds, causing however a series of further problems relating to the fact that the traditional string cutters or toothed cutters can cause damage to plants and terrain, while also being dangerous for safety, as during uprooting of the infesting weeds the blades of the cutter might throw up, at great velocity, stones, rocks, soil, with a possible risk for persons, animals and surrounding plants.

Document US-A-2791953, which represents the closest prior art, describes an agricultural tool for removing infesting weeds which form in terrains used for fruit orchards and vineyards, the device being applied on a hinged frame positioned on an agricultural vehicle and comprising at least a disc-shaped cutter, wherein the disc-shaped cutter is equipped with a plurality of fixed blades positioned substantially vertically, and wherein the fixed blades facing downwards are fixed at right angles on the edge of the disc, and the lower cutting ends, i.e. the ends that during operation will be used to operate in the ground, are curved in a graduated way towards the inside with respect to the centre of rotation of the disc.

### DESCRIPTION OF THE INVENTION

The present invention discloses an agricultural tool for weeding terrain dedicated to fruit orchards and vineyards, able to obviate or at least reduce the drawbacks mentioned in the foregoing.

The invention also proposes to provide an agricultural tool for weeding terrains dedicated to fruit orchards and vineyards which is very simple to realise and is able to prevent effects that are harmful for the orchard or vineyard or hazardous for persons connected with the traditional cutters currently available on the market.

This is obtained with an agricultural tool for weeding fruit orchards and vineyards, the characteristics of which are described in the main claim.

The dependent claims describe advantageous embodiments of the invention.

The main advantages of this solution, as well as all those deriving from the constructional simplicity thereof, firstly relate to the fact that the concept underlying the cutter of the invention enables obtaining the perfect uprooting of the infesting weeds, while simultaneously avoiding harmful effects for the plantation and for persons.

This is attained, according to the invention, by combined use of flexible tubes alternated with specially-profiled blades, in such a way that the blades enable elimination of infesting weeds near the trunks of the fruit trees, which for example are constituted by vines, without displacement of terrain, while the flexible tubes enable elimination of weeds from the vines themselves and between vines without causing any damage to the vines themselves.

### DESCRIPTION OF THE DRAWINGS

Other characteristics and advantages of the invention will emerge from a reading of the description given below of an embodiment, provided by way of a nonlimiting example, with the aid of the accompanying drawings, in which:

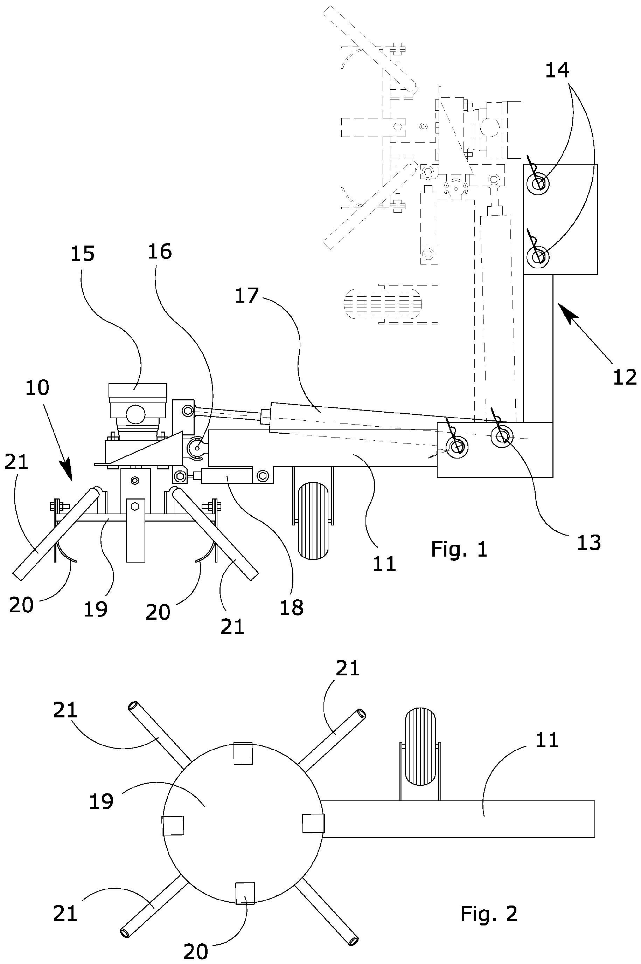

- figure 1 is a schematic view of a work arm for self-propelled agricultural equipment comprising a cutter according to the invention for removal of weeds in proximity of rows of fruit trees or vines;
- figure 2 shows the arm viewed from below;

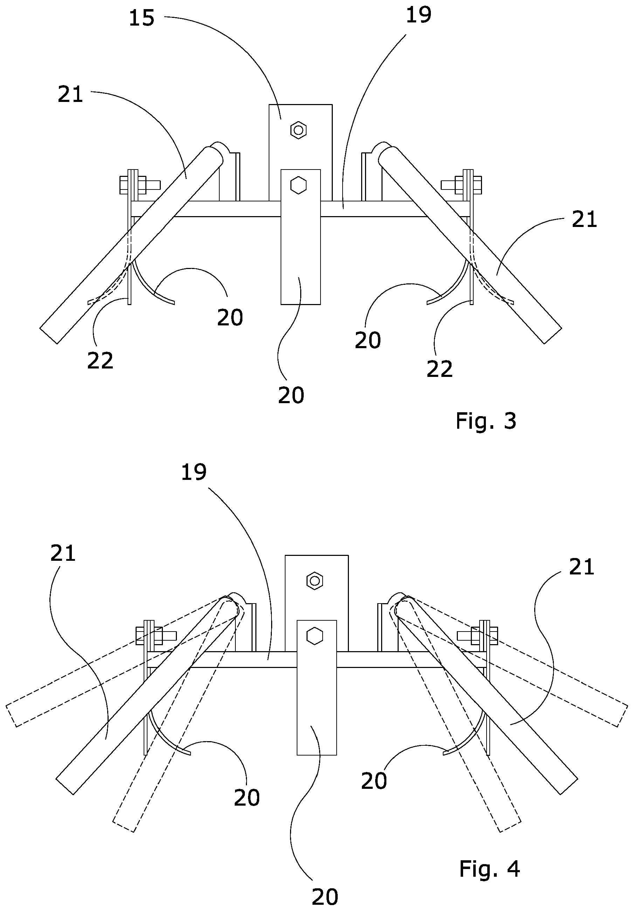

- figure 3 is a schematic view of the cutter of the invention in frontal profile;
- figure 4 is a detail of the cutter highlighting the operation of the flexible tubes make up the system;

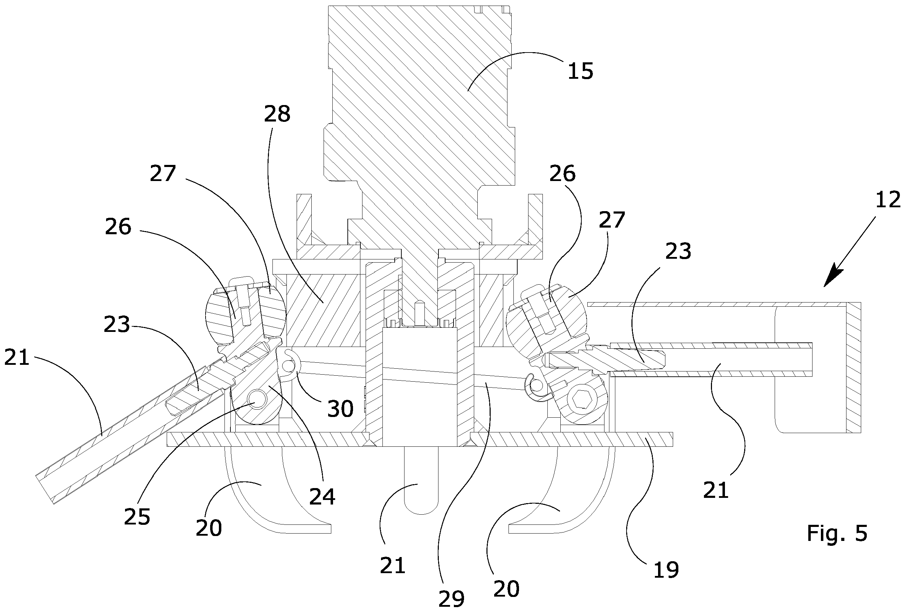

- figure 5 is a schematic illustration of the cutter in a further embodiment along section A-A of figure 9;
- figure 6 is a view of the cutter of the preceding figure along section B-B of figure 9;
- figure 7 is a perspective view of the cutter of figures 5 and 6;
- figure 8 is a frontal view of the cutter according to the further embodiment in its entirety;
- figures 9 and 10 are schematic views respectively in plan view and in lateral view of the cutter according to the further embodiment.

### DESCRIPTION OF AN EMBODIMENT OF THE INVENTION

With reference to figures from 1 to 4, reference numeral 10 denotes in its entirety an agricultural tool for weeding infesting vegetation that forms in terrains used for fruit orchards and vineyards, which tool is normally installed on a mechanical arm 11 in turn mounted on a frame 12 applicable on-board an agricultural tractor. The mechanical arm 11 is pivoted on the frame 12 by means of a pivot 13, and the frame 12 itself is applied on suitable brackets present on the agricultural vehicle, by fasteners 14.

The agricultural tool 10 comprises a motor-driven head 15 applied to the arm 11 which head 15 can rotate so as to move from a vertical position in a rest period to a substantially horizontal working position, by intervention of a hydraulic piston 17.

The invention comprises a rotating disc 19 constituting the work tool for the weeding, which is provided with a plurality of substantially-vertical fixed blades 20, interposed with a plurality of flexible tubes 21 arranged externally and inclined downwards and having a radial arrangement with respect to a rotation axis of the disc 19.

More precisely the fixed blades 20 are facing downwards, as they are fixed perpendicularly on respective supports located on the edge of the disc 19, and the lower cutting ends thereof, that is to say the ends which in the operating step will be used to operate in the terrain, are curved in a graduated way internally with respect to a centre of rotation of the disc, in an arrangement that will prevent stones and soil being thrown up by centrifugal force in all directions.

The inclined flexible tubes 21 are realised so as to enable the cutter to approach the trunk of the fruit trees or vines in the terrain which contains the weeds to be uprooted and which weeds are eliminated without causing damage to the barks of the tree or vines, in this way obviating the traditional drawbacks described in the preamble to the present description, as the tubes 21 are flexible but quite sturdy in consistency and operate in best working conditions when the rotation velocity thereof is appropriately controlled, i.e. with a setting of the cutter velocity at a low revolution rate.

In the embodiment illustrated in figures from 5 to 10, each of the flexible tubes 21 is mounted on a pin 23 in turn fixed on a support 24 hinged on a pivot 25 of a bracket fixed on the rotating disc 19. This solution enables each flexible tube to move angularly from a position inclined towards the terrain to a raised position in which it adopts a substantially horizontal alignment.

The angular movement of the flexible tubes 21 associated with the supports 24 is imparted by a kinematic cam system.

More precisely the upper part of the support 24 terminates with a cylindrical appendage 26 which forms a pivot for a convex roller 27, which constitutes the actuating means, or feeler, for rotation of the groups constituted by the supports 24 associated with the flexible tubes 21.

A fixed cam 28 is located in the central part of the carousel formed by the rotating disc 19 and the groups of flexible tubes 21 and at the height of the convex rollers 27, which fixed cam 28 pushes on the rollers 27 during rotation of the carousel, in opposition to elastic means 29.

The elastic means, which maintain the groups of the flexible tubes 21 in a condition of pushing upwards, in the case illustrated are represented in the figures of the drawings as an annular elastic band constrained to hooks 30 present on the inside of each rotatable mounting 24. In other embodiments the elastic means consist of springs, and in this case a spring is used for each group.

From an operational point of view, in the embodiment in which flexible tubes 21 having controlled oscillation are used, during rotation of the carousel constituted by the disc 19 on which the flexible tubes 21 positioned on a pivoted support are mounted, the feeler rollers 27 are intercepted by the fixed cam 28, which alternatively exerts pushing steps to overcome the force of the elastic band 29, so as to incline the tubes 21 downwards.

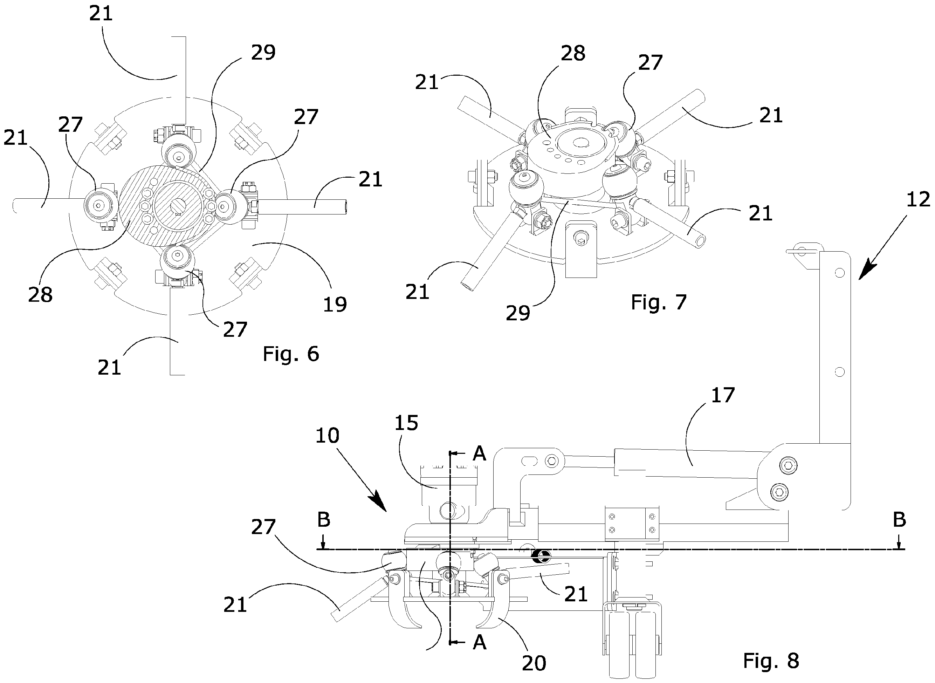

It should be noted that, as shown in figure 8, the part that projects most from the cam 28, i.e. the part producing the greatest thrust on the rollers 27, is located towards the outside relative to the mounting frame 12, and this means that the uprooting area in which the tubes 21 work and which is in proximity of the trunks of the plants is the most external zone, while in the inner sector the cam 28 produces the lowest thrust, enabling the elastic band 29 to raise the tubes once more, which then move into the highest position thereof and thereof the position thereof most distant from the terrain, in this way preventing residues of earth and stones from being thrown towards the vehicle.

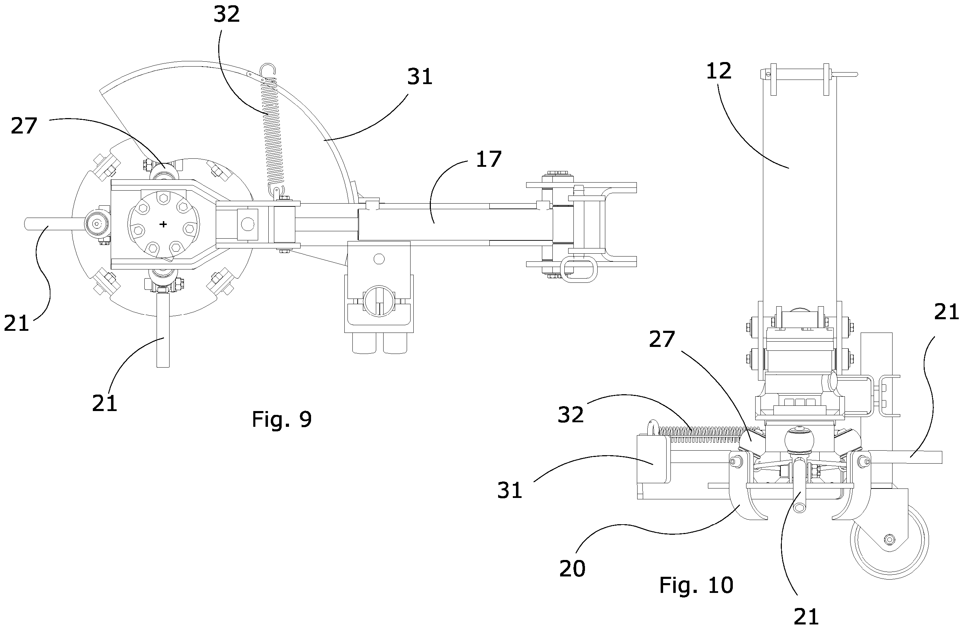

Further, use is made of a protective guard 31 shown in figures 9 and 10, having a substantially arched shape and being positioned in proximity of the carousel zone in which the flexible tubes 21 are about to move upwards, i.e. at the exit from the uprooting sector. The guard is located on a rotatable support and remains in opposition to the spring 32 to compensate for any thrusts by bodies such as stones or rocks thrown up or any obstacles on the terrain.

The solutions described enable a very effective weeding of the terrain surrounding the plants, while also preventing dangerous throwing-up of stones and soil in the vicinity of the operating zone.

According to a further embodiment, further blades 22 are applied at the position of some of the curved blades 20, which further blades 22 in this case have a straight shape and are arranged in a vertical position, the function of which is to cut the roots of the weeds, and therefore uproot them more effectively.

For use of the apparatus described, it is sufficient to fix the frame 12 bearing the arm 11 and the respective equipment 10 on the agricultural vehicle, normally a tractor, and move to the zone to be treated while keeping the equipment in the closed vertical alignment, so that the overall dimensions during the transfer are the smallest possible and fall within maximum road dimensions.

After reaching the working zone for positioning the equipment, it is sufficient to extend the piston 17 which moves the arm 11 into a substantially horizontal position.

At this point the rotation of the cutter 10 can be operated, which during the advancing of the tractor can be moved in proximity of the base of the fruit trees, so that it can act to uproot the infesting weeds without damaging the plant bark and simultaneously preventing stones from being hurled into the nearby areas.

The invention as described above refers to a preferred embodiment. It is nevertheless clear that the invention is susceptible to numerous variations falling within the scope of the disclosure, in the context of technical equivalents.

## Claims

1. An agricultural tool for weeding infesting herbs which grow in terrains dedicated to fruit orchards and vineyards, the tool being applied on a hinged frame positionable on an agricultural vehicle and comprising at least a cutter disc (19), wherein the cutter disc is provided with a plurality of fixed blades (20) facing downwards and arranged substantially vertically, and wherein the fixed blades are fixed perpendicularly on an edge of the disc, and lower cutting ends thereof, being the ends which in the operative step will work in the terrain, are curved in a graduated way internally with respect to a centre of rotation of the disc, **characterised in that** the fixed blades (20) are interposed with a plurality of flexible tubes (21) arranged inclined externally downwards and having a radial arrangement with respect to a rotation axis of the disc.

2. The agricultural tool according to claim 1, **characterised in that** it comprises a motor-driven head (15) applied by means of a joint (16) to an arm (11) which can rotate so as to move from a vertical position in a rest period, to a substantially horizontal working position, by intervention of a hydraulic piston (17).

3. The agricultural tool according to one of the preceding claims, **characterised in that** the motor-driven working head (15) can rotate angularly on the joint (16) by intervention of a further piston (18).

4. The agricultural tool according to one of the preceding claims, **characterised in that** further blades (22) are applied at the position of some of the curved blades (20), which further blades (22) have a straight shape and are arranged in a vertical position, for cutting roots of infesting weeds.

5. The agricultural tool according to claim 1, **characterized in that** each of the flexible tubes (21) is mounted on a pin (23) in turn fixed on a support (24) hinged on a pivot (25) of a bracket fixed on the rotating disc (19) enabling each flexible tube a possibility of moving angularly from an inclined position towards the soil to a raised position so as to adopt a substantially horizontal trim.

6. The agricultural tool according to claim 5, **characterised in that** an angular displacement of the flexible tubes (21) combined with each support (24) is imparted by a kinematic system comprising a fixed cam (28) located at a centre of a sector of rotation, which acts against rounded rollers (27) subject to rotation located in an upper part of the support (24), and also **characterised in that** the cam acts in opposition to elastic means (29) tending to maintain the flexible tubes in an upwards direction.

7. The agricultural tool according to any one of the preceding claims, **characterised in that** it further comprises a protective guard (31) having a substantially curved shape, the guard being positioned on a rotatable support and being retained in opposition to the spring (32).

## Patentansprüche

1. Landwirtschaftsgerät zum Jäten von Unkraut, das auf Obst- und Weingärten gewidmetem Gelände wächst, wobei das Gerät an einem gelenkigen Gestell angebracht ist, positionierbar an einem Landwirtschaftsfahrzeug und umfassend mindestens eine Schneidscheibe (19), wobei die Schneidscheibe mit einer Vielzahl an fixierten Messern (20) ausgestattet ist, die nach unten gewandt und im Wesentlichen vertikal angeordnet sind, und wobei die fixierten Messer senkrecht an einer Kante der Scheibe fixiert sind, und deren untere Schneidenden, bei denen es sich um die Enden handelt, die in der Betriebsphase im Boden arbeiten, innenseitig auf abgestufte Weise zu einer Rotationsmitte der Scheibe gekrümmt sind, **dadurch gekennzeichnet, dass** die fixierten Messer (20) zwischen einer Vielzahl an flexiblen Leitungen (21) eingesetzt sind, angeordnet außenseitig nach unten geneigt und aufweisend eine radiale Anordnung im Vergleich zu einer Rotationsachse der Scheibe.

2. Landwirtschaftsgerät nach Anspruch 1, **dadurch gekennzeichnet, dass** es einen motorbetriebenen Kopf (15) umfasst, angebracht mittels eines Gelenks (16) an einem Arm (11), der sich drehen kann, sodass eine Bewegung von einer vertikalen Position in einer Ruheposition in eine im Wesentlichen horizontale Arbeitsposition durch Eingriff eines Hydraulikkolbens (17) erfolgt.

3. Landwirtschaftsgerät nach einem der vorhergehenden Ansprüche, **dadurch gekennzeichnet, dass** sich der motorbetriebene Arbeitskopf (15) winkelig am Gelenk (16) durch Eingriff eines weiteren Kolbens (18) drehen kann.

4. Landwirtschaftsgerät nach einem der vorhergehenden Ansprüche, **dadurch gekennzeichnet, dass** weitere Messer (22) an der Position einiger der gekrümmten Messer (20) angebracht sind, wobei die weiteren Messer (22) eine gerade Form aufweisen und in einer vertikalen Position angebracht sind, um die Wurzeln von Unkraut zu schneiden.

5. Landwirtschaftsgerät nach Anspruch 1, **dadurch gekennzeichnet, dass** eine jede der flexiblen Leitungen (21) auf einem Zapfen (23) montiert ist, der wiederum an einer Halterung (24) fixiert ist, die gelenkig an einem Drehpunkt (25) eines Bügels befestigt ist, der an der Drehscheibe (19) fixiert ist, ermöglichend einer jeden flexiblen Leitung eine Möglichkeit, sich winkelig von einer geneigten Position hinführend zum Boden zu einer angehobenen Position zu bewegen, sodass sie eine im Wesentlichen horizontale Einstellung einnimmt.

6. Landwirtschaftsgerät nach Anspruch 5, **dadurch gekennzeichnet, dass** eine Winkelverschiebung der flexiblen Leitungen (21) in Kombination mit einer jeden Halterung (24) durch ein kinematisches System erzeugt wird, umfassend einen fixen Nocken (28), befindlich in einer Mitte eines Rotationssektors, der gegen gerundete Walzen (27) wirkt, die einer Drehung unterliegen, befindlich in einem oberen Teil der Halterung (24), und auch **dadurch gekennzeichnet, dass** der Nocken elastischen Mitteln (29) entgegenwirkt, die dazu tendieren, die flexiblen Leitungen in einer Aufwärtsrichtung beizubehalten.

7. Landwirtschaftsgerät nach einem der vorhergehenden Ansprüche, **dadurch gekennzeichnet, dass** es zudem eine Schutzabdeckung (31) umfasst, aufweisend eine im Wesentlichen gekrümmte Form, wobei die Schutzabdeckung auf einer drehbaren Halterung positioniert ist und der Feder (32) entgegenwirkend gehalten wird.

## Revendications

1. Outil agricole servant à désherber les mauvaises herbes poussant dans les terrains utilisés comme vergers ou vignobles, l'outil étant appliqué sur un châssis articulé pouvant se positionner sur un véhicule agricole et comprenant au moins un disque à trancher (19), dans lequel le disque à trancher est pourvu d'une pluralité de lames fixes (20) orientées vers le bas et disposées de façon substantiellement verticale, et dans lequel les lames fixes sont fixées perpendiculairement sur un bord du disque, et ses extrémités de découpe inférieures, étant les extrémités qui, lors de l'étape de fonctionnement, travailleront dans le terrain, sont incurvées de façon graduelle intérieurement par rapport au centre de rotation du disque, ·**caractérisé en ce que** les lames fixes (20) sont interposées avec une pluralité de tubes flexibles (21) disposés extérieurement vers le bas et comportant une disposition radiale par rapport à un axe de rotation du disque.

2. Outil agricole selon la revendication 1, **caractérisé en ce qu'**il comprend une tête motorisée (15) appliquée au moyen d'un joint (16) à un bras (11) pouvant pivoter de manière à se déplacer d'une position verticale dans une position d'arrêt, à une position de travail substantiellement horizontale grâce à un piston hydraulique (17).

3. Outil agricole selon l'une des revendications précédentes, **caractérisé en ce que** la tête de travail motorisée (15) peut tourner angulairement sur le joint (16) grâce à un piston (18) supplémentaire.

4. Outil agricole selon l'une des revendications précédentes, **caractérisé en ce que** des lames (22) supplémentaires sont appliquées en correspondance de la position de certaines lames incurvées (20), lesdites lames (22) supplémentaires ayant une forme rectiligne et étant disposées dans une position verticale pour couper les racines des mauvaises herbes.

5. Outil agricole selon la revendication 1, **caractérisé en ce que** chacun des tubes flexibles (21) est monté sur une cheville (23) à son tour fixée sur un support (24) monté articulé sur une pivot (25) d'un support fixé sur le disque rotatif (19) permettant à chaque tube flexible une possibilité de se déplacer angulairement d'une position inclinée vers le sol à une position relevée de manière à adopter une assiette substantiellement horizontale.

6. Outil agricole selon la revendication 5, **caractérisé en ce qu'**un déplacement angulaire des tubes flexibles (21) combiné à chaque support (24) est conféré par un système cinématique comprenant une came fixe (28), située à un centre d'un secteur de rotation, agissant contre des rouleaux arrondis (27), soumis à rotation, situés dans une partie supérieure du support (24), et caractérisé aussi **en ce que** la came agit en opposition à des moyens élastiques (29) ayant tendance à maintenir les tubes flexibles dans une direction vers le haut.

7. Outil agricole selon l'une quelconque des revendications précédentes, **caractérisé en ce qu'**il comprend également un cache de protection (31) ayant une forme substantiellement incurvée, le cache étant positionné sur un support rotatif et étant retenu en opposition au ressort (32).
